# FASCICULE DE BREVET EUROPEEN

(11) **EP 2 141 054 B1**
(45) Date de publication et mention de la délivrance du brevet: **17.08.2011**
(21) Numéro de dépôt: 09163951.8
(22) Date de dépôt: 26.06.2009
(51) Int. Cl.: B60T 11/26

(54) **Dispositif formant réservoir de liquide de frein de véhicule automobile, pourvu d'une chambre de filtration de fabrication simplifiée**
Vorrichtung, die einen Bremsflüssigkeitsbehälter für Kraftfahrzeuge bildet und mit einer Filterkammer vereinfachter Fertigung ausgestattet ist
Device forming a brake fluid reservoir of an automobile, equipped with a filter chamber with simplified design

(30) Priorité: 01.07.2008 FR 0854424
(43) Date de publication de la demande: 06.01.2010
(73) Titulaire: Peugeot Citroën Automobiles SA, 78140 Vélizy Villacoublay (FR)
(72) Inventeur: Angebaud, Pascal, 95870, BEZONS (FR)

(56) Documents cités:
- DE-A1- 10 310 170
- FR-A- 2 874 879

## Description

La présente invention concerne un dispositif formant réservoir de liquide de frein de véhicule notamment automobile.

Le document FR2874879 présente un dispositif de ce type qui permet d'alimenter en liquide de frein un circuit de freinage du véhicule, et qui comprend à cet effet un réservoir définissant un compartiment d'accès du liquide, séparé d'une enceinte de réserve de liquide de frein, qui communique avec le circuit de freinage, par deux parois de cloisonnement disposées en regard et à distance l'une de l'autre.

Ces parois de cloisonnement sont conformées pour définir une chicane de circulation du liquide, et délimitent une chambre de filtration du liquide depuis le compartiment d'accès jusqu'à l'enceinte de réserve.

La réalisation de la chambre de filtration d'un tel dispositif est souvent fastidieuse et coûteuse.

L'invention vise justement à résoudre ce problème.

Pour atteindre ce but, l'invention concerne un dispositif formant réservoir de liquide de frein de véhicule notamment automobile, permettant d'alimenter en liquide de frein un circuit de freinage du véhicule, conforme à l'objet de la revendication 1.

Selon une caractéristique, le réservoir de liquide de frein comprend deux coques supérieure et inférieure, solidarisées l'une à l'autre suivant un plan de joint commun et la bande du filtre est disposée dans ce plan de joint.

Selon une autre caractéristique, les deux parois de cloisonnement sont parallèles, la bande de filtration étant perpendiculaires à ces parois, et l'une des parois comprend un passage de circulation du liquide de frein situé dans la coque supérieure et l'autre paroi de cloisonnement comprend un passage de circulation du liquide de frein situé dans la coque inférieure.

Avantageusement, le passage de liquide de frein de la paroi de cloisonnement situé du côté du compartiment d'accès, est disposé dans la coque inférieure.

De préférence, les deux parois de cloisonnement sont constituées d'une matière plastique et la bande de filtration est une toile en une matière plastique identique à celle des deux parois de cloisonnement et étant thermosoudée à celles-ci.

Selon un mode de réalisation préféré, le réservoir comprend un tube d'accès de retour du liquide de frein provenant de divers organes du circuit de freinage du véhicule débouchant au sein du compartiment d'accès du liquide, en amont de la paroi de cloisonnement disposée du côté de ce compartiment d'accès.

L'invention concerne également un procédé de fabrication d'un dispositif formant réservoir de liquide hydraulique destiné à alimenter un circuit hydraulique d'un véhicule automobile, comprenant :
- une étape de fabrication d'une coque supérieure comprenant deux cloisons internes s'étendant chacune depuis la paroi interne de cette coque supérieure jusqu'au plan passant par le bord délimitant l'ouverture de la coque supérieure,
- une étape de fabrication d'une coque inférieure comprenant deux cloisons internes s'étendant chacune depuis la paroi interne de cette coque inférieure jusqu'au plan passant par le bord délimitant l'ouverture de la coque inférieure,
- une étape de rapprochement l'une de l'autre des deux coques inférieure et supérieure de manière à disposer les cloisons internes de la coque supérieure dans un même plan que les cloisons de la coque inférieure en ayant leurs bords respectifs en regard les uns des autres,

- une étape d'interposition entre les bords en regard les uns des autres des cloisons internes d'une bande de filtration, et
- une étape de scellement hermétique des deux coques inférieure et supérieure de manière à fixer la bande de filtration entre les deux cloisons de la coque supérieure et les deux cloisons de la coque inférieure dans le plan de joint de ces deux coques.

Selon une autre caractéristique, les deux coques, les cloisons et la bande de filtration sont en une même matière plastique, et le scellement des deux coques ainsi que la fixation de la bande de filtration entre les cloisons de la coque supérieure et les cloisons de la coque inférieure, sont effectués par thermosoudage.

L'invention sera mieux comprise, et d'autres buts, caractéristiques, détails et avantages de celle-ci apparaîtront plus clairement à la lecture de la description qui va suivre, faite en référence aux figures annexés, donnés uniquement à titre d'exemple, et parmi desquels :
- la figure 1 est une vue schématique en coupe d'un dispositif selon l'invention, comprenant une chicane de circulation de liquide de frein ;
- la figure 2 représente une vue schématique de la chicane de circulation du liquide de la figure 1, selon un premier mode de réalisation ;
- la figure 3 montre une vue schématique de la chicane de circulation du liquide de la figure 1, selon un deuxième mode de réalisation ;
- la figure 4 illustre une vue de dessus du dispositif de la figure 1 ;
- la figure 5 représente les parois de cloisonnement du dispositif permettant la réalisation de la chicane de circulation de la figure 3 ;
- la figure 6 est une vue analogue à celle de la figure 1 représentant la fixation d'une bande filtrante au sein de la chambre de filtration du dispositif selon l'invention.

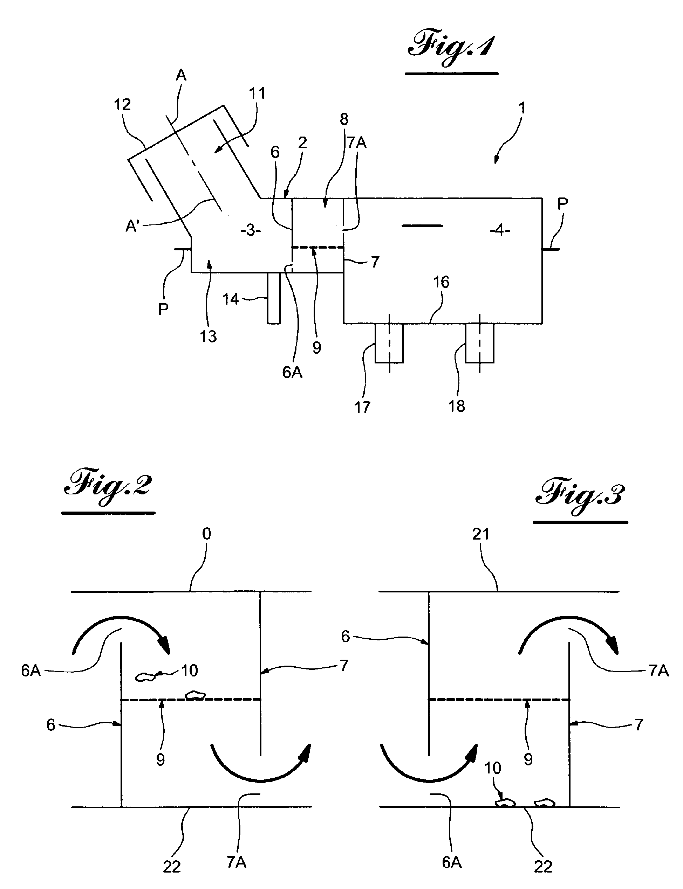

Sur la figure 1 est représenté un dispositif formant réservoir de liquide de frein de véhicule notamment automobile, selon l'invention.

Ce dispositif 1 permet d'alimenter en liquide de frein un circuit de freinage du véhicule, non représenté, et comprend un réservoir 2 définissant un compartiment d'accès 3 du liquide, séparé d'une enceinte de réserve 4 de liquide de frein, qui communique avec le circuit de freinage, par deux parois de cloisonnement 6, 7 disposées en regard et à distance l'une de l'autre.

Les deux parois sont parallèles l'une de l'autre et conformées pour définir une chicane de circulation du liquide et délimitent une chambre de filtration du liquide 8, au sein de laquelle est disposé un filtre 9.

La circulation du liquide de frein au sein de ce réservoir 2, est effectuée depuis le compartiment d'accès jusqu'à l'enceinte de réserve 4, en passant par la chambre de filtration 8 pour que le liquide introduit dans le compartiment d'accès 3 soit débarrassé de ses impuretés 10 avant d'atteindre l'enceinte de réserve 4.

Plus précisément, le compartiment d'accès 3 du liquide définit un goulot de remplissage 11 s'étendant selon une direction oblique AA' et obturé par un bouchon 12 ôté par un utilisateur désirant remplir le réservoir de liquide de frein. Selon une variante de réalisation possible, non représentée, le goulot de remplissage s'étend selon une direction verticale.

Le goulot 11 débouche dans un espace interne au réservoir 13 délimité par l'une des parois de cloisonnement, qui sera désignée comme la paroi d'accès 6.

En outre, ce compartiment d'accès 3 comprend un tube 14 débouchant dans l'espace interne 13, en amont de la paroi d'accès 6, et dont la fonction est de déverser dans le compartiment d'accès, le liquide de frein provenant de divers organes du circuit de freinage du véhicule, en amont de la chambre de filtration 8, pour que les impuretés contenues dans ce liquide de retour, ne parvienne pas non plus dans l'enceinte de réserve 4.

L'enceinte de réserve 4 définit un volume interne sensiblement parallélépipédique dont la face la plus proche du compartiment d'accès 3 est constituée par la deuxième paroi de cloisonnement 7, qui sera nommée paroi de réserve 7. Selon une variante de réalisation non représentée, l'enceinte peut présenter toute autre forme.

La face inférieure 16 de cette enceinte 4 comprend deux embouchures de deux tubes 17, 18 reliés à un maître cylindre non représenté, qui communiquent avec le circuit de liquide de frein.

La chicane de circulation 8 du liquide délimitée par les parois de cloisonnement 6, 7 fonctionne grâce à deux passages ou fenêtres 6A, 7A réalisées respectivement dans les deux parois de cloisonnement 6, 7 et disposées de part et d'autre du filtre 9, afin d'assurer un passage obligatoire du liquide par le filtre 9.

Tel que représenté sur les figures 2 et 3, il existe au moins deux variantes de réalisation de la chambre de filtration.

Selon la variante de la figure 2, le passage réalisé sur la paroi d'accès 6 est disposé au dessus du filtre, alors que celui réalisé sur la paroi de réserve est disposé en dessous du filtre, le liquide circulant depuis la partie haute de la chambre de filtration jusqu'à la partie basse, en passant par le filtre.

Dans ce cas, le filtre est dimensionné de façon à pouvoir accumuler les impuretés durant toute la durée de vie du réservoir.

Selon l'autre variante représentée sur la figure 3, le passage réalisé sur la paroi d'accès 6 est disposé cette fois en dessous du filtre 9 tandis que celui de l'autre paroi 7 est disposé au dessus de ce filtre 9.

De cette façon, le liquide circule de bas en haut, en passant par le filtre, et les impuretés retenues par le filtre tombent par gravité sur la paroi de fond du réservoir.

Cette solution est préférée à celle de la figure 2 car le filtre reste propre.

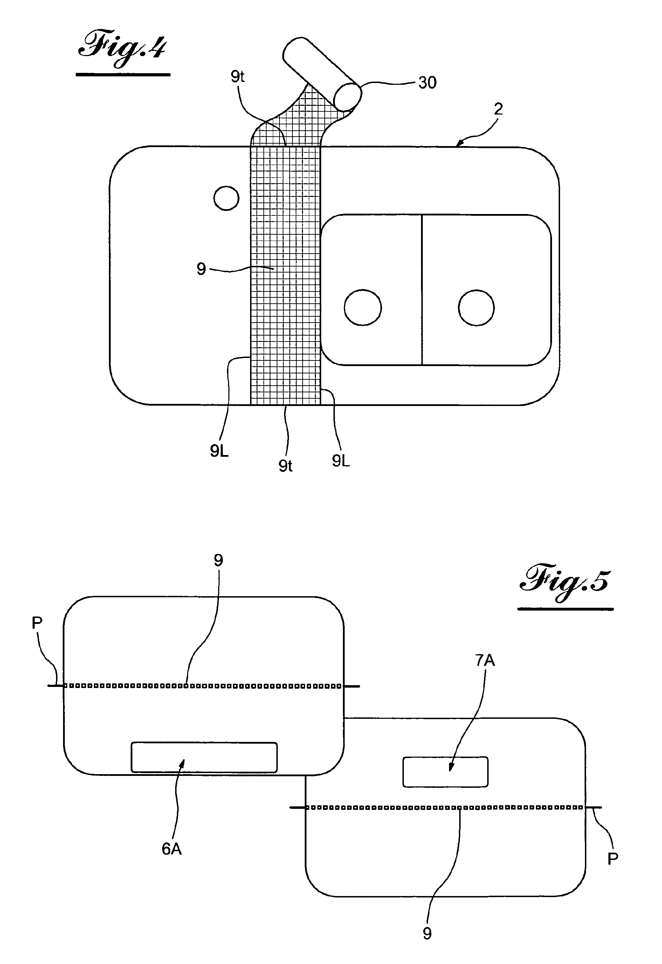

Ce filtre est réalisé selon l'invention sous la forme d'une bande fixée aux parois de cloisonnement 6, 7 par ses deux bords longitudinaux 9L, tel que représenté sur la figure 4, et avantageusement perpendiculairement à ces parois 6, 7.

Les deux bords transversaux 9t du filtre 9 sont quant à eux fixés sur la paroi interne du réservoir 2.

La fixation de la bande de filtration 9 aux parois de cloisonnement 6 et 7 est avantageusement réalisée durant le procédé de fabrication du dispositif formant réservoir 1.

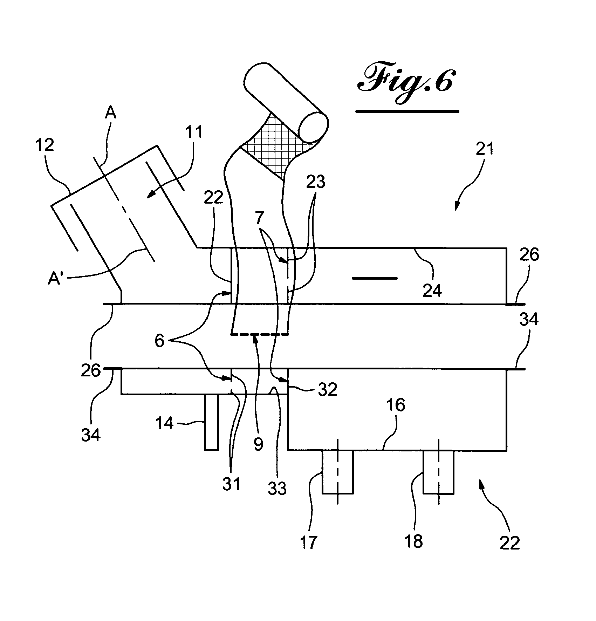

En effet, tel que représenté sur la figure 6, ce procédé de fabrication comprend une étape de solidarisation de deux coques supérieure 21 et inférieure 22 le long d'un plan de joint P représenté schématiquement sur la figure 1.

La coque supérieure 21 comprend deux cloisons internes parallèles 22 et 23 s'étendant depuis la paroi interne 24 de cette coque supérieure 24 jusqu'au plan passant par le bord 26 délimitant l'ouverture de cette coque supérieure 21.

Elle porte le goulot de remplissage 11.

Par ailleurs, le bord périphérique 26 de la coque supérieure et les bords d'extrémité des deux cloisons internes 22, 23 de cette coque supérieure définissent un plan de joint P1.

De façon analogue, la coque inférieure 22 comprend deux cloisons internes parallèles 31 et 32 qui s'étendent depuis la paroi interne 33 de la coque inférieure 22 jusqu'au plan passant par le bord 34 délimitant l'ouverture de cette coque inférieure 22.

Les cloisons internes 31, 32 de la coque inférieure 22 sont disposées de façon à venir dans le prolongement des cloisons 22, 23 de la coque supérieure 21 lorsque ces coques sont mises en contact l'une de l'autre par leurs bords périphériques 26, 34.

Et le bord périphérique 34 de la coque inférieure et les bords d'extrémité des deux cloisons internes 3.1, 32 de cette coque inférieure définissent un plan de joint P2.

En outre, le tube d'accès 14 de retour du liquide de frein provenant des divers organes du circuit de freinage et/ou d'embrayage et les tubes de communication 17, 18 avec le maître cylindre, sont montés sur cette coque inférieure 22.

Une fois les deux coques fabriquées, celles-ci sont rapprochées l'une de l'autre de manière à disposer les cloisons internes 22, 23 de la coque supérieure 21 dans un même plan que les cloisons 31, 32 de la coque inférieure 22 en ayant leurs bords respectifs en regard les uns des autres.

Selon un mode de réalisation particulièrement avantageux, les deux coques, les cloisons et la bande de filtration sont en des matières compatibles entre elles, aptes à être thermosoudées l'une à l'autre, ou de préférence une même matière plastique.

Dans ce cas, une plaque chauffante est interposée entre les deux coques 21, 22 et ces dernières sont amenées à pincer cette plaque, de façon à mettre en fusion les bords périphériques 26 et 34 des coques et les bords d'extrémité des cloisons 22, 23, 31, 32.

Les coques sont ensuite éloignées l'une de l'autre pour retirer la plaque chauffante et la bande de filtration 9 est interposée entre les bords en regard les uns des autres des cloisons internes 22, 23, 31, 32, encore à une température élevée.

On rapproche enfin l'une de l'autre les deux coques 21, 22 et on applique une pression pour sceller par thermosoudage les deux coques le long de leurs bords périphériques 26, 34 et les cloisons 22, 23, 31, 32, le long de leurs bords d'extrémité, la bande de filtration se retrouvant à être interposée par ses bords longitudinaux entre les cloisons 22, 23, 31, 32, et par ses bords transversaux entre les coques, et fixée également à celles-ci par thermosoudage.

L'invention telle que décrite ci-dessus présente différents avantages parmi desquels :
- le faible coût de revient du filtre utilisé sous forme de bande,
- la simplicité de l'intégration du filtre durant la solidarisation l'une à l'autre des deux coques,
- l'intégration du filtre au sein même du réservoir au plan de soudure, et donc à l'extérieur du goulot de remplissage, qui autorise l'aspiration du liquide excédentaire du réservoir, et qui n'est pas possible lorsque le filtre est disposé au sein du goulot,
- la filtration des impuretés du liquide de freinage provenant de divers organes du circuit de freinage et/ou d'embrayage,
- les dimensions de la bande de filtration, qui développent une surface filtrante importante,
- la réalisation en une seule pièce du réservoir muni du filtre, ce qui évite le conditionnement et le stockage d'un filtre séparé du réservoir, et limite les risques de pollution de celui-ci par des poussières, par exemple durant son transport et son stockage,
- la chambre de filtration sera judicieusement disposée pour limiter les déplacements de liquide de frein afin d'éviter l'allumage intempestif du voyant de la planche de bord, en cas notamment de forte accélération et freinage ainsi qu'en présence d'une force centrifuge en virage,
- l'obtention d'un gain de qualité et de sécurité.

## Revendications

1. Dispositif formant réservoir de liquide de frein de véhicule notamment automobile, permettant d'alimenter en liquide de frein un circuit de freinage du véhicule, comprenant un réservoir (2) définissant une enceinte de réserve de liquide de frein (4), qui communique avec le circuit de freinage, séparée d'un compartiment d'accès du liquide (3) par deux parois de cloisonnement (6, 7) disposées en regard et à distance l'une de l'autre, et conformées pour définir une chicane de circulation du liquide, ces parois (6, 7) délimitant une chambre de filtration du liquide (8), **caractérisé en ce qu'**un filtre sous la forme d'une bande (9) est fixé entre les deux parois de cloisonnement (6, 7) par ses deux bords longitudinaux opposés (9L).

2. Dispositif selon la revendication 1, **caractérisé en ce que** le réservoir de liquide de frein (2) comprend deux coques supérieure (21) et inférieure (22), solidarisées l'une à l'autre suivant un plan de joint commun (P) et **en ce que** la bande de filtration (9) est disposée dans ce plan de joint (P).

3. Dispositif selon la revendication 2, **caractérisé en ce que** les deux parois de cloisonnement (6, 7) sont parallèles, la bande de filtration (9) étant perpendiculaire à ces parois (6, 7), et **en ce que** l'une des parois (6, 7) comprend un passage de circulation (6A, 7A) du liquide de frein situé dans la coque supérieure (21) et l'autre paroi (7, 6) comprend un passage de circulation (7A, 6A) du liquide de frein situé dans la coque inférieure (22).

4. Dispositif selon la revendication 3, **caractérisé en ce que** le passage de liquide de frein (6A) de la paroi de cloisonnement (6) situé du côté du compartiment d'accès (3), est disposé dans la coque inférieure (22).

5. Dispositif selon l'une des revendications précédentes, **caractérisé en ce que** les deux parois de cloisonnement (6, 7) et la bande de filtration (9) sont constituées de matières compatibles aptes à être thermosoudées l'une à l'autre, et de préférence de matières plastiques identiques.

6. Dispositif selon l'une des revendications précédentes, **caractérisé en ce que** le réservoir (2) comprend un tube d'accès de retour du liquide de frein provenant de divers organes du circuit de freinage du véhicule (14) débouchant au sein du compartiment d'accès du liquide (3), en amont de la paroi de cloisonnement (6) disposée du côté de ce compartiment d'accès (3).

7. Procédé de fabrication d'un dispositif formant réservoir de liquide hydraulique destiné à alimenter un circuit hydraulique d'un véhicule automobile, **caractérisé en ce qu'**il comprend successivement :
- une étape de fabrication d'une coque supérieure (21) comprenant deux cloisons internes parallèles (22, 23) s'étendant chacune depuis la paroi interne (24) de cette coque supérieure (21) jusqu'au plan (P) passant par le bord (26) délimitant l'ouverture de la coque supérieure (21),
- une étape de fabrication d'une coque inférieure (22) comprenant deux cloisons internes parallèles (31, 32) s'étendant chacune depuis la paroi interne (33) de cette coque inférieure (22) jusqu'au plan (P) passant par le bord délimitant l'ouverture de la coque inférieure (22),
- une étape de rapprochement l'une de l'autre des deux coques inférieure (22) et supérieure (21) de manière à disposer les cloisons internes (22, 23) de la coque supérieure (21) dans un même plan que les cloisons (31, 32) de la coque inférieure (22) en ayant leurs bords respectifs en regard les uns des autres,
- une étape d'interposition entre les bords en regard les uns des autres des cloisons internes (22, 23, 31, 32) d'une bande de filtration (9), et
- une étape de scellement hermétique des deux coques inférieure (22) et supérieure (21) de manière à fixer la bande de filtration (9) entre les deux cloisons (22, 23) de la coque supérieure (21) et les deux cloisons (31, 32) de la coque inférieure (22) dans le plan de joint de ces deux coques (21, 22).

8. Procédé selon la revendication 7, **caractérisé en ce que** les deux coques (21, 22), les cloisons (22, 23, 31, 32) et la bande de filtration (9) sont en une même matière plastique, et **en ce que** le scellement des deux coques (21, 22) ainsi que la fixation de la bande de filtration (9) entre les cloisons (22, 23, 31, 32) de la coque supérieure (21) et les cloisons (22, 23, 31, 32) de la coque inférieure (22) sont effectués par thermosoudage.

## Claims

1. A device forming a brake fluid tank of a vehicle, in particular a motor vehicle, permitting a braking circuit of the vehicle to be supplied with brake fluid, comprising a tank (2) defining a brake fluid storage enclosure (4), which communicates with the braking circuit, separated from a fluid access compartment (3) by two partition walls (6, 7) arranged opposite and at a distance from each other, and shaped to define a circulation baffle of the fluid, these walls (6, 7) delimiting a filtration chamber (8) of the fluid, **characterized in that** a filter in the form of a strip (9) is fixed between the two partition walls (6, 7) by its two opposite longitudinal edges (9L).

2. The device according to Claim 1, **characterized in that** the brake fluid tank (2) comprises two upper (21) and lower (22) shells, integrated with each other following a common joint plane (P) and **in that** the filtration strip (9) is arranged in this joint plane (P).

3. The device according to Claim 2, **characterized in that** the two partition walls (6, 7) are parallel, the filtration strip (9) being perpendicular to these walls (6, 7), and **in that** one of the walls (6, 7) comprises a circulation passage (6A, 7A) of the brake fluid situated in the upper shell (21) and the other wall (7, 6) comprises a circulation passage (7A, 6A) of the brake fluid situated in the lower shell (22).

4. The device according to Claim 3, **characterized in that** the brake fluid passage (6A) of the partition wall (6) situated on the side of the access compartment (3), is arranged in the lower shell (22).

5. The device according to one of the preceding claims, **characterized in that** the two partition walls (6, 7) and the filtration strip (9) are constituted by compatible materials able to be heat-sealed to each other, and preferably of identical plastic materials.

6. The device according to one of the preceding claims, **characterized in that** the tank (2) comprises an access tube for the return of the brake fluid originating from various members of the braking circuit of the vehicle (14) opening out within the access compartment of the liquid (3), upstream of the partition wall (6) arranged on the side of this access compartment (3).

7. Method for the manufacture of a device forming a hydraulic fluid tank intended to supply a hydraulic circuit of a motor vehicle, **characterized in that** it comprises successively:
- a manufacturing stage of an upper shell (21) comprising two parallel internal partitions (22, 23) each extending from the internal wall (24) of this upper shell (21) to the plane (P) passing through the edge (26) delimiting the opening of the upper shell (21),
- a manufacturing stage of a lower shell (22) comprising two parallel internal partitions (31, 32) each extending from the internal wall (33) of this lower shell (22) to the plane (P) passing through the edge delimiting the opening of the lower shell (22),
- a stage of bringing towards each other of the two lower (22) and upper (21) shells so as to arrange the internal partitions (22, 23) of the upper shell (21) in the same plane as the partitions (31, 32) of the lower shell (22), having their respective edges opposite each other,
- an interposition stage between the edges opposite each other of the internal partitions (22, 23, 31, 32) of a filtration strip (9), and
- a stage of hermetic sealing of the two lower (22) and upper (21) shells so as to fix the filtration strip (9) between the two partitions (22, 23) of the upper shell (21) and the two partitions (31, 32) of the lower shell (22) in the joint plane of these two shells (21, 22).

8. Method according to Claim 7, **characterized in that** the two shells (21, 22), the partitions (22, 23, 31, 32) and the filtration strip (9) are of the same plastic material, and **in that** the sealing of the two shells (21, 22) and also the fixing of the filtration strip (9) between the partitions (22, 23, 31, 32) of the upper shell (21) and the partitions (22, 23, 31, 32) of the lower shell (22) are carried out by heatsealing.

## Patentansprüche

1. Vorrichtung, die einen Bremsflüssigkeitsbehälter für ein Fahrzeug, insbesondere ein Kraftfahrzeug bildet, die es erlaubt, einen Bremskreislauf des Fahrzeugs mit Bremsflüssigkeit zu versorgen, die einen Behälter (2) aufweist, der einen Bremsflüssigkeits-Vorratseinschluss (4) bildet, der mit dem Bremskreislauf kommuniziert, getrennt von einem Zugangsraum der Flüssigkeit (3) durch zwei Unterteilungswände (6, 7), die einander gegenüber und voneinander entfernt angeordnet und ausgebildet sind, um eine Flüssigkeitszirkulationsschikane zu bilden, wobei diese Wände (6, 7) eine Filterkammer der Flüssigkeit (8) bilden, **dadurch gekennzeichnet, dass** ein Filter in der Form eines Bands (9) zwischen den zwei Unterteilungswänden (6, 7) über seine zwei gegenüber liegenden Längsränder (9L) befestigt ist.

2. Vorrichtung nach Anspruch 1, **dadurch gekennzeichnet, dass** der Bremsflüssigkeitsbehälter (2) eine obere Schale (21) und eine untere Schale (22) aufweist, die miteinander entlang einer gemeinsamen Fügeebene (P) fest verbunden sind, und dass das Filterband (9) in dieser Fügeebene (P) angeordnet ist.

3. Vorrichtung nach Anspruch 2, **dadurch gekennzeichnet, dass** die zwei Unterteilungswände (6, 7) parallel sind, wobei das Filterband (9) zu diesen Wänden (6, 7) senkrecht ist, und dass eine der Wände (6, 7) einen Zirkulationsdurchgang (6A, 7A) der Bremsflüssigkeit, die sich in der oberen Schale (21) befindet, aufweist, und dass die andere Wand (7, 6) einen Zirkulationsdurchgang (7A, 6A) der Bremsflüssigkeit, die sich in der unteren Schale (22) befindet, aufweist.

4. Vorrichtung nach Anspruch 3, **dadurch gekennzeichnet, dass** der Bremsflüssigkeitsdurchgang (6A) der Unterteilungswand (6), der sich auf der Seite des Zugangsraum (3) befindet, in der unteren Schale (22) angeordnet ist.

5. Vorrichtung nach einem der vorhergehenden Ansprüche, **dadurch gekennzeichnet, dass** die zwei Unterteilungswände (6, 7) und das Filterband (9) aus kompatiblen Materialien, die aneinander wärmegeschweißt werden können und vorzugsweise aus identischen Kunststoffen sind, bestehen.

6. Vorrichtung nach einem der vorhergehenden Ansprüche, **dadurch gekennzeichnet, dass** der Behälter (2) eine Zugangsröhre zum Rücklaufen der Bremsflüssigkeit aufweist, die von verschiedenen Organen des Bremskreislaufs des Fahrzeugs (14) kommt, die in den Zugangsraum (3) der Flüssigkeit stromaufwärts der Unterteilungswand (6), die auf der Seite dieses Zugangsraums (3) angeordnet ist, mündet.

7. Verfahren zum Herstellen einer Vorrichtung, die einen Hydraulikflüssigkeitsbehälter bildet, der dazu bestimmt ist, einen Hydraulikkreislauf eines Kraftfahrzeugs zu versorgen, **dadurch gekennzeichnet, dass** es nacheinander Folgendes aufweist:
- einen Schritt des Herstellens einer oberen Schale (21), die zwei parallele Innenwände (22, 23) aufweist, die sich jeweils von der Innenwand (24) dieser oberen Schale (21) bis zu der Ebene (P) erstrecken, die durch den Rand (26) verläuft, der die Öffnung der oberen Schale (21) abgrenzt,
- einen Schritt des Herstellens einer unteren Schale (22), die zwei parallele Innenwände (31, 32) aufweist, die sich jeweils von der Innenwand (33) diese unteren Schale (22) bis zu der Ebene (P) erstrecken, die durch den Rand verläuft, der die Öffnung der unteren Schale (22) abgrenzt,
- einen Schritt des Annäherns miteinander der unteren Schale (22) und der oberen Schale (21), so dass die Innenwände (22, 23) der oberen Schale (21) in der gleichen Ebene angeordnet werden wie die Wände (31, 32) der unteren Schale (22), indem ihre jeweiligen Ränder einander gegenüberliegen,
- einen Schritt des Einfügens eines Filterbands (9) zwischen die Ränder in Gegenüberlage der Innenwände (22, 23, 31, 32) und
- einen Schritt des hermetischen Versiegelns der unteren Schale (22) und der oberen Schale (21) derart, dass das Filterband (9) zwischen den zwei Wänden (22, 23) der oberen Schale (21) und den zwei Wänden (31, 32) der unteren Schale (22) in der Fügeebene dieser zwei Schalen (21, 22) befestigt wird.

8. Verfahren nach Anspruch 7, **dadurch gekennzeichnet, dass** die zwei Schalen (21, 22), die Wände (22, 23, 31, 32) und das Filterband (9) aus einem gleichen Kunststoff bestehen, und dass das Versiegeln der zwei Schalen (21, 22) sowie das Befestigen des Filterbands (9) zwischen den Wänden (22, 23, 31, 32) der oberen Schale (21) und der Wände (22, 23, 31, 32) der unteren Schale (22) durch Wärmeschweißen erfolgen.
